# EUROPEAN PATENT APPLICATION

(11) **EP 1 890 474 A1**
(43) Date of publication of application: **20.02.2008**
(21) Application number: 07015096.6
(22) Date of filing: 01.08.2007
(51) Int. Cl.: H04M 11/06

(54) **Automatic noise suppression system for telephone line interfaces**

(30) Priority: 17.08.2006 IT mc20060100
(71) Applicant: Marcetti, Stefano, 60028 Osimo Stazione (AN) (IT)
(72) Inventor: Marcetti, Stefano, 60028 Osimo Stazione (AN) (IT)
(74) Representative: Baldi, Claudio

(57) **Abstract**

The present invention relates to a system for the suppression of disturbances for telephone line interfaces made up of:
a) a low order entrance filter for high frequencies
b) a Common Mode filter for attenuation of disturbances and noises of such type
c) a Differential Mode filter for attenuation of disturbances and noises of such type
d) a low pass filter of second order or superior of L-C type of variable corner frequency controlled by a control circuit
e) a control circuit that monitoring the state of the telephone line and controls and pilots the low pass filter whit a variable frequency corner
f) a monitoring system of the state of the conditions of the line connected to the same line and to the control circuit.

## Description

### Field of application of the invention

These inventions generally refers to a communication system, and in particular, to all those xDSL applications that, involving a telephone line interface (POTS), require an improvement of the quality of the telecommunications system as far as disturbance and noise resulting from this interface are concerned.

### Description of figures

The FIG. 1 shows the power spectral density of POTS 1 and xDSL 2 signals.

The FIG. 2 shows a normalized topology of implant used in practice.

The FIG. 3 shows the block diagram whit a topology of implant take as an application of this invention.

The Fig. 4 shows the insertion of PANSS system on POTS output user line card of DSLAM.

The FIG. 5 shows the block diagram of PANSS system.

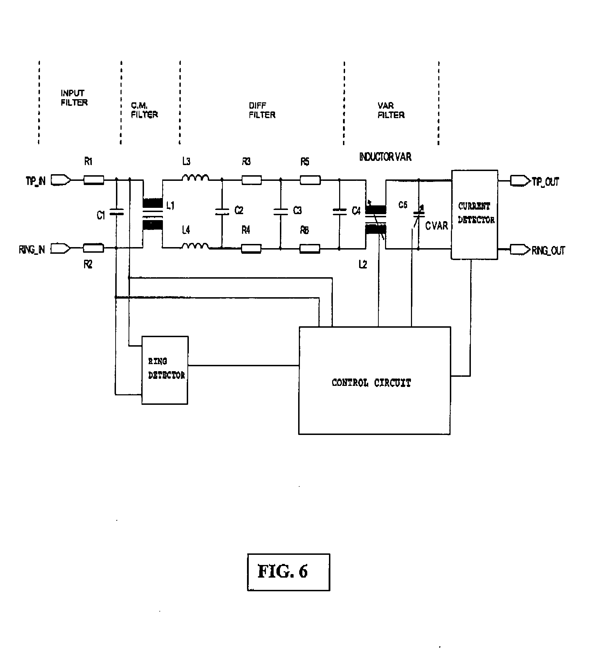

In FIG. 6 shows an example of electrical scheme of PANSS system.

### State of the art

In the last few years the telecommunications systems have evolved from the traditional telephone system (POTS) towards high speed connection systems such as all the xDSL technologies.

These technologies co-exist, as well known, with the already existing switched telephone network, with its control signals, and with all the other information transmitted in the frequency band dedicated to this kind of service, which spreads, as known, from the DC to about 4kHz.

These new high speed communication systems, that share the same telephone line, such as ADSL (Asymmetric Digital Subscriber Line), RADSL (Rate Adaptive Digital Subscriber Line), VDSL (Very High Speed Digital Subscriber Line), or more generally xDSL, provide today connections to the most varied services such as VOIP (Voice over Internet Protocol), Internet, VOD (Video on Demand) or, as more generally defined, TRIPLE PLAY services (Voice, Data, Video).

As known, these technologies use the frequency band that starts at about 30 kHz and reaches, at its highest end, a maximum frequency defined for every transmission system by the various international regulations.

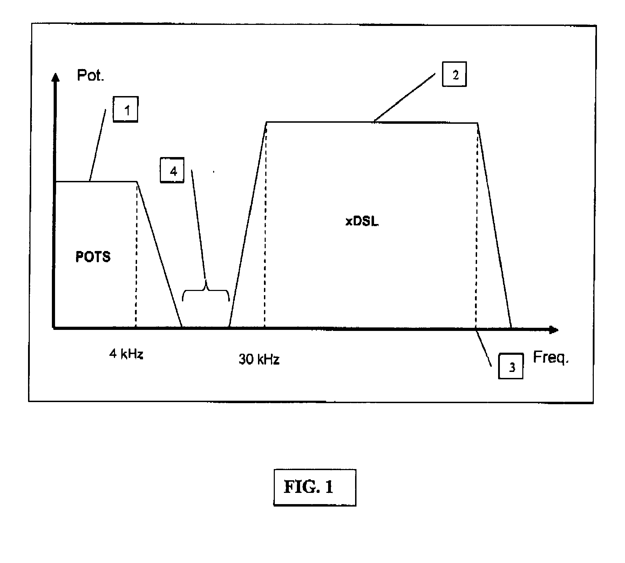

Fig. 1 illustrates the allocation of the spectrum of the POTS 1 and xDSL 2 signals.

More specifically, the diagram shows on the Y axis the power (Pot.) associated to such type of signals and on the X axis the frequency (freq.) of such signals.

As known, the signal band POTS 1 spreads from the DC to approximately 4 kHz (without taking into consideration the billing tone signal), while the signal band xDSL 2 generally spreads from about 30 kHz to highest frequency value 3 that depends, as already stated, on the particular transmission technology used in the connection. A "guard" band or separation 4 is inserted to provide a separation margin between the signals, to facilitate the physical realization of the filters necessary for the separation of the signals and to reduce the cross-talk between the POTS 1 band and the xDSL 2 band.

Thanks to this clear division of the band of frequencies used, both signals sent to the user terminal can share the same telephone line.

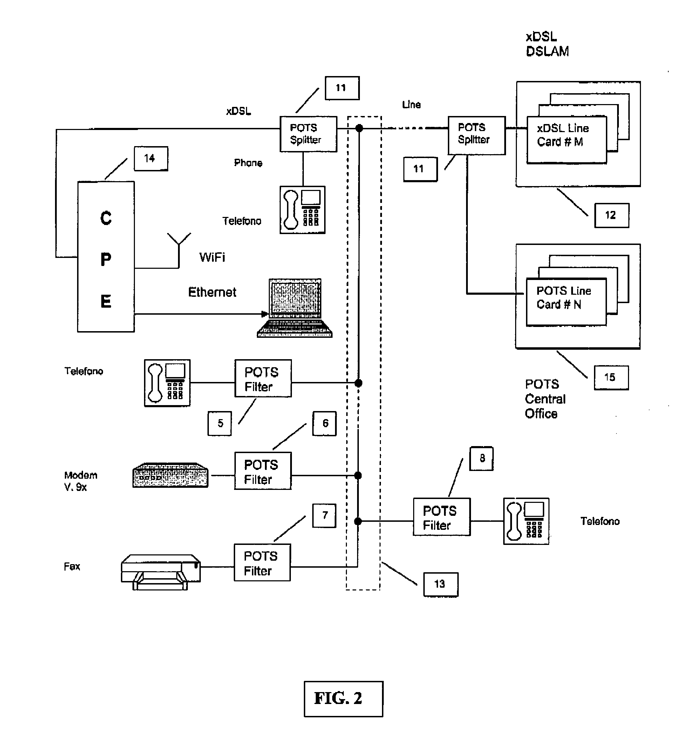

Therefore, the normal kind of network that we will use in this document and that will appear in the following description refers to the diagram illustrated in Fig. 2.

As said above, based on the distribution by frequency of the signals determined by regulations, a filter called POTS splitter 11, which divides by frequency the signals involved, is inserted at each extremity of the communication system.

The POTS splitter 11 is, therefore, a circuit made up of two filters; one low pass filter and one high pass, that separate efficiently the signals present on line.

Normally the high pass filter is inserted directly in the transceiver xDSL, while the low pass (normally called POTS filter) is provided as a separate unit of the system and works by allowing the signals destined to the terminals to pass while rejecting the high frequency components of the xDSL signal.

At the central office, apart from the described functions, at the same time the POTS splitter 11 also provides the filtering and protection required to eliminate the noise at high frequency that is often attributed to the signals coming from the POTS interface (commutation, disturbance signals, etc.).

Conventionally, therefore, in present day telecommunication systems, in the user interface on central side a filter is inserted with the aim of protecting the POTS interface circuits from the high frequency components of the xDSL circuit and at the same time preventing the above mentioned disturbance signals from reaching the user plant or from creating disturbance to the xDSL transceiver present on this side of the connection.

For this purpose in order to obtain frequencies of over 4 kHz and attenuations according to specifications over 55 dB above 25 kHz, high order filtering circuits are used that are relatively complex and expensive (bear in mind that such attenuation characteristics must be guarantee also over 10 MHz in the case of VDSL).

Until now we have described the "state of the art" in a telecommunications system based on mixed technologies xDSL and POTS on the same physical link.

Fig. 2 also illustrates an example of this kind of network, that shows apart from the xDSL user device C.P.E. 10, the various POTS filter 5, 6, 7, 8 necessary for the correct behavior of all the classic telephone devices.

Also in this case, by means of the xDSL device 10, all the above mentioned services are offered.

Lately, fully exploiting the xDSL technology, communication devices called IADs (Integrated Access Devices) have established themselves. These permit to converge all kinds of services (video, data and voice) on the same technology.

The service regarding telephone communication is, therefore, provided by the same xDSL connection in totally digital technology.

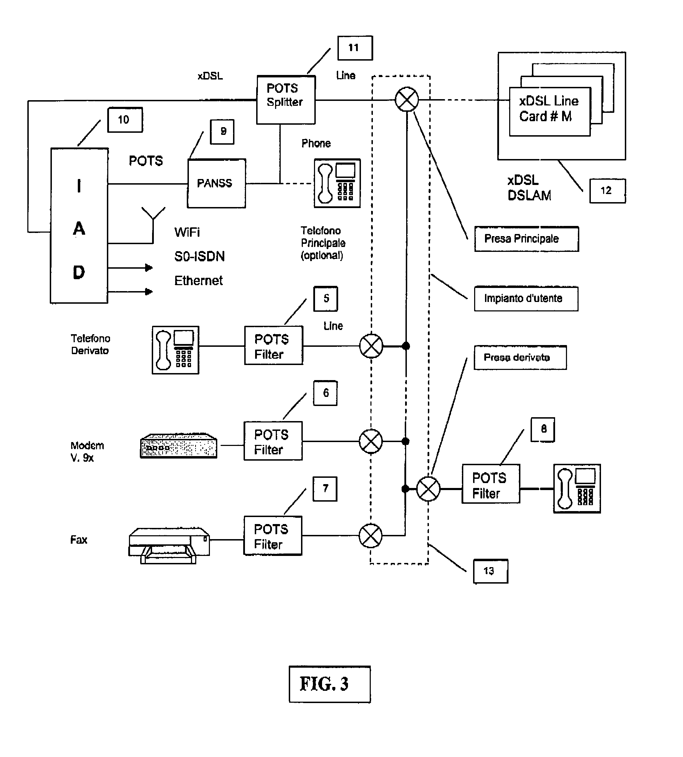

The considerable advantage that the operators have using this technology is that they no longer need the connection to the central office for the POTS services (as shown in Fig. 3): the user cable is, therefore, directly connected to the owner's xDSL interface without even the use of the POTS splitter 11 filter.

Such IAD devices in the user's home, therefore, reproduce opportunely the telephone central office interface enabling in this way the use of all the classic communication appliances suitable for that kind of connection (modem, fax, videophones, Dect technology devices, etc.) with few changes in the type and layout of the installation.

These new types of installation together with the availability of new services (TRIPLE PLAY) of ever increasing speed (bit-rate up to 100 Mbit/sec), understandably create new unexplored situations regarding the interaction of the communication signals involved in this area and, in the practical applications done, the strong demand for better protection from the disturbances produced by the POTS telephone interfaces regarding the xDSL devices in order to guarantee the required performances of such systems.

A new kind of plant that some telecommunications operators are using effectively in order to make some limited changes on the user's installation, demonstrates even more the requirement for protection from the above mentioned disturbances.

This type of plant connects both the local POTS interface (with all the classic POTS devices on which this operates) and the xDSL interface, using substantially, without interventions, the standard network connection present at the user's terminal (see Fig. 3).

The novelty and advantage of this type of network lies in the complete installation of the network directly by the user (self-installation) without the need of the intervention of any specialized technician.

The above network situation has been given as an example of the use of the invention in question because it illustrates in a particularly significant and explicit way, the advantages of the invention itself.

The invention in question, therefore, can be used in all the situations of the present state of the art as described above, resolving totally the problems shown in respect of the regulations themselves.

### Description of the invention

The invention will be described referring to the attached figures, which illustrate amongst other things, also some network situations where this device can be used efficiently.

This must not be considered as a restriction in the field of use of this device nor a restriction in the coverage of the patent relative to this invention that, on the contrary, is to be considered extended to cover all the alternatives, modifications and uses that are implicit in the spirit and the scope of the invention itself as defined by the claims detailed below.

Fig. 3, as already said, represents the block diagram of the kind of network taken as an example of the use of the present invention.

The layout of this network is of the kind most widespread in the users' networks with a "bus" 13 made by the various telephone sockets (both primary and secondary) and the telephone cable for their connection: this bus is then connected, via the classic copper telephone network, to the user xDSL line card on the DSLAM 12 of the service provider, as already described in the background of the invention in question.

The classic configuration of this kind of network provides for the presence of a POTS filter 5, 6, 7, 8 for every telephone terminal (telephone, fax, modem, etc.), a POTS splitter 11 for the connection of the xDSL device, called in this case IAD 10.

The aforementioned device, as can be seen, provides amongst its ports (bus SO, WiFi, Ethernet, etc.) also a POTS interface that is necessary to pilot all the user telephone devices. As shown in the network diagram, said interface by means of the POTS splitter 11 is reconnected to the same line where also the xDSL connection is.

This network situation, even if made with devices built according to regulations, manifests a high error-rate on the xDSL connection every time the POTS interface is activated.

The activation of this interface occurs every time a call is received or made on that line with any user device.

The errors that occur on the xDSL connection are particularly tiresome and unacceptable on the video streaming: from the user's point of view they present themselves as image freezing, incorrect reconstruction of the forms and colours or even connection failure.

On other kinds of service such as Internet or VOIP or file transfer, the same disturbances are less evident to the user on account of the communication protocols that generally provide for the correction of the error or the retransmission of the incorrect packets.

The invention in question has been purposely designed to solve this kind of problem.

The same Fig. 3 shows its position in the users network and has been called here with the acronym "PANSS" 9 (POTS Automatic Noise Suppression System).

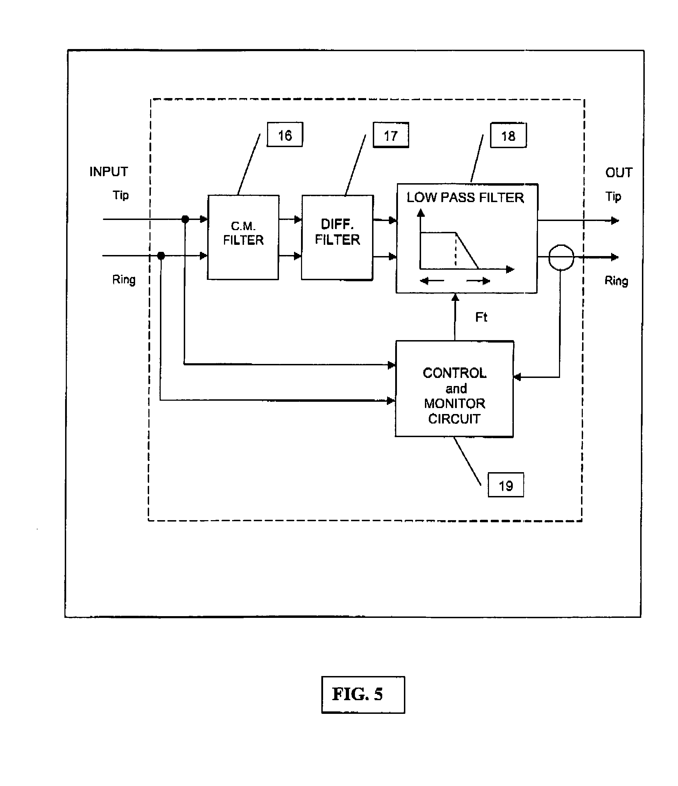

The diagram in Fig. 5, on the other hand, outlines the block diagram of this system of disturbance suppression.

The system consists substantially in a low pass filter whose corner frequency is varied by a control circuit (Control and Monitor Circuit 19 in Fig. 3) according to the signals of the POTS interface on which this system has been inserted.

The control circuit 19 maintains the filter at its lowest corner frequency even when on the POTS interface only the continuous current of powering the customer devices is present (few micro-Amps), in order to achieve the maximum protection against the disturbances caused by the interface itself,

Said situation makes it "ready" to filter also all the possible transients that can occur on such interfaces; use of the line by the user (of-hook state), selection of the number dialled by pulse selection, insertion and disconnection of the ring tone generator (freq 25 Hz), insertion and disconnection of the FSK transmitter for the transmission of data for the identification of the caller, insertion and disconnection of the phone signal or charge tone, etc.

The control circuit, "monitors" the line on which it is connected and, from time to time, selects the filter characteristic most suitable for the kind of signal present.

All the device draws its operating energy from the POTS interface to which it is connected, and this important characteristic (listed also among the claims of the invention), makes it perfectly balanced and without any kind of connection to earth.

The current absorption is within the limits imposed by norms (TBR21 - ETSI, G.992.3 - ITU-T, etc) and the behaviour is resistive whit very high impedance.

There is nothing to prevent (with necessary caution and modifications to the project), however, the making of this device with the power supply provided by means of any other system (battery, electricity network, etc.): the coverage of this patent is to be considered extended also to such cases.

In the entrance of the device another Common Mode filter (C.M. Filter) 16, purposely designed, has been inserted. This serves to eliminate all the Common Mode disturbances (i.e. all those that generated inside the POTS interface close their current course using the earth connection), that could affect the entire user installation and all the devices connected to it.

Such disturbances and noises cause tiresome errors in the xDSL connection (sometimes even causing it to be disconnected) because they become signals of differential type, and therefore received by xDSL. devices, every time the balance towards earth of the connection or of the devices connected to it results to be inadequate.

Following the Common Mode filter a Differential 17 filter has been inserted with a corner frequency slightly over 100 kHz, with the purpose of eliminating the high frequency disturbances.

This circuit configuration has been necessary on account of the limited attenuation at high frequencies of the one placed in cascade 18 with variable band.

The low pass filter 18 has a frequency level that can be chosen between a few hundred Hz and a few dozen kHz, while it has a attenuation characteristic beyond its passing band of at least 40 dB/decade.

This filter has been made in such a way that the band variation takes place without any electrical discontinuity, so as not to lose the necessity to not generate in any way signals of impulsive type on the interface,

This main characteristic of the device is part of the innovations perfected to ensure the correct working of the entire disturbance suppression system and is part of the claims.

Lastly, as already mentioned, the control circuit 19, through its "sensing" circuit "monitors" the various operational states of the line (use condition, presence of ringing signal, etc.) and consequently pilots the variable band filter.

It provides also the correct timing for the band commutation in the presence of FSK tones sent, in accordance with regulations, after the first ringing signal.

From the block diagram of Fig. 5 it is obvious that all the filters described above must be capable of working with signals of maximum amplitude of about 100 Vrms overlapping the value of the continuous voltage of the typical central office battery (36 Vdc - 72 Vdc) and of maintaining their attenuation/frequency characteristics also during the passage of continuous current flowing from the central office interface to the telephone terminals connected to the device.

From the above said it can be deduced that all the filters in question must be made with analogical technology and with good components opportunely selected.

Particular attention must also be paid to the choice of the components used to make the filtering circuits regarding the generation of distortions of the passing signals, source of generation of harmonicas and undesired disturbances.

It is also well-known that the interface characteristics for the telephone terminals imposed by regulations (impedance values, return loss, balancing, frequencies and values for the signal and control, etc.) vary from one country to another and, therefore, it is necessary to adapt the project each time to satisfy requests.

Another network situation that can benefit from the invention in question is the classic one in Fig. 2, described in the present state of the art.

Also in this case, with the supply of new kinds of services and with the use of ever faster transmission speeds (ADSL2+, VDSL, etc.), the need for an ever greater protection from disturbances resulting from the POTS interface can be noted.

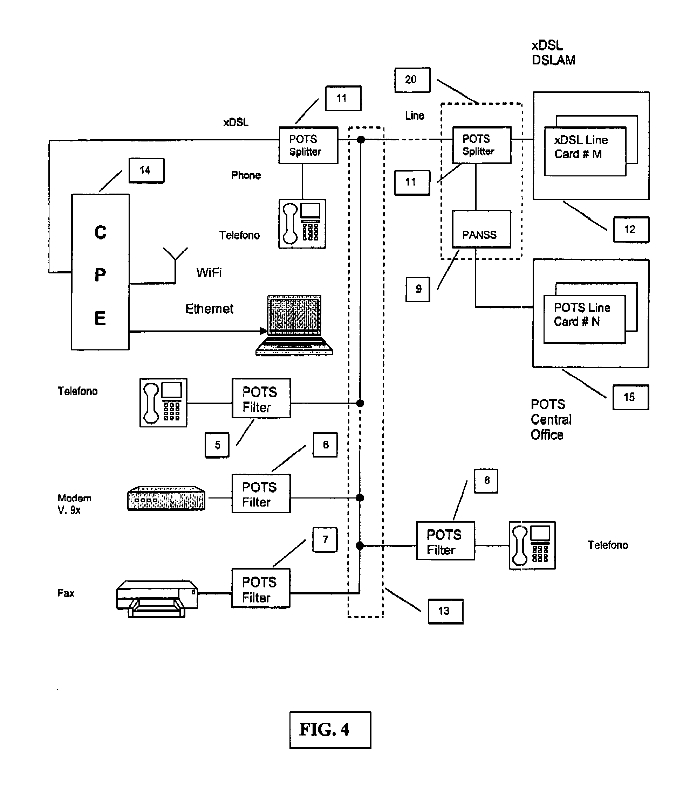

In Fig. 4 the insertion on the POTS central office interface port of the system PANSS 9 can be noted, that also in this case has a negligible network impact.

It is important to underline also the possibility offered by the system's characteristics (e.g. no need for external power supply) to be integrated in a new POTS Splitter 20 that contains internally also this device: in this way there would be the possibility to up-grade (where requested) all the xDSL systems in use, changing only the central offices cards containing the POTS splitter.

In the block diagram Fig. 4 this new device has been indicated in its essential parts (POTS splitter and PANSS) described with the label number 20, and as it includes the invention in question it is to be considered covered by this patent.

## Claims

1. A system for the suppression of disturbances for telephone line interfaces made up of:
a) a low order entrance filter for high frequencies
b) a Common Mode filter for attenuation of disturbances and noises of such type
c) a Differential Mode filter for attenuation of disturbances and noises of such type
d) a low pass filter of second order or superior of L-C type of variable corner frequency controlled by a control circuit
e) a control circuit that monitoring the state of the telephone line and controls and pilots the low pass filter whit a variable frequency corner
f) a monitoring system of the state of the conditions of the line connected to the same line and to the control circuit

2. A system for the suppression of disturbances made up as outlined in point 1, in which:
a) the power necessary for operating the entire system is supplied by the same communication line to which the system is connected
b) the power necessary for operating the entire system is provided by any other source (battery, electricity network, etc.) and is not supplied by the same communication line to which the system is connected
c) the variation of the corner frequency of the low pass filter (L-C), that is the change of the components in which it consists, takes place without electric discontinuity or commutations

3. A system for the suppression of disturbances made up as outlined in point 1, with the characteristics of point 2, that is part of another system however ample or complex.

4. A system for the suppression of disturbances made up as outlined in point 1, with the characteristics of point 2, that is part of a telecommunications system made up as follows:
a) a xDSL user device (I.A.D.) capable of providing a telephone interface (POTS) for the connection of classic telephone devices (telephone, fax, modem, etc.) as well as interfaces Ethernet, WiFi, SO, etc.
b) a POTS Splitter connected to the user's network by means of a primary socket, connected to the device described in the previous point a), to the telephone line and, on its "Phone" interface, to the present system for the suppression of disturbances (PANSS)
c) a user bus made up whit a telephone cable connected to a series of secondary sockets and a primary socket
d) a series of POTS Filters (micro-filters) positioned between each secondary socket and each terminal of telephone type (telephone, fax, modem, etc.)
e) a xDSL central office device (DSLAM), connected whit the xDSL line card, to the same telephone line terminated on the bus of the previous point c)
f) a line for the connection between the user's devices and those of the central office

5. A system for the suppression of disturbances made up as outlined in point 1, with the characteristics of point 2, that is part of a telecommunications system made up as follows:
a) a xDSL user device (Router, I.A.D., etc.) capable of providing a telephone interface (POTS) for the connection of classic telephone devices (telephone, fax, modem, etc.) as well as interfaces Ethernet, WiFi, SO, etc.
b) a POTS Splitter connected to the user's network by means of a primary socket, connected to the device described in the previous point a), and, on its "Phone" interface, to a classic telephone device (telephone, fax, modem, etc.)
c) a user bus made up whit a telephone cable connected to a series of telephone sockets
d) a series of POTS Filters (micro-filters) positioned between each socket and each terminal of telephone type
e) a POTS Splitter connected to the xDSL device of central office (DSLAM), connected to the telephone line, and on its "Phone" interface, to the present system for the suppression of disturbances (PANSS)
f) a xDSL central office device (DSLAM), connected by its proper line card, to the POTS Splitter device described in previous point e)
g) a connection of telephone central office (POTS Central Office), connected by its proper user line card, to the present system for the suppression of disturbances (PANSS)
h) a line for the connection between the user's devices and those of central office.
